# EUROPÄISCHE PATENTSCHRIFT

(11) **EP 3 251 788 B1**
(45) Veröffentlichungstag und Bekanntmachung des Hinweises auf die Patenterteilung: **07.08.2019**
(21) Anmeldenummer: 17174067.3
(22) Anmeldetag: 01.06.2017
(51) Int. Cl.: B23Q 1/03, B23F 1/00, B23Q 1/26, B23Q 1/76, B23Q 16/02, B23Q 5/34, B23Q 16/00

(54) **VORRICHTUNG ZUM ABSTÜTZEN EINES ZU BEARBEITENDEN WERKSTÜCKS**
DEVICE FOR SUPPORTING A WORKPIECE TO BE MACHINED
DISPOSITIF DE SOUTIEN D'UNE PIÈCE À USINER

(30) Priorität: 03.06.2016 DE 102016006889
(43) Veröffentlichungstag der Anmeldung: 06.12.2017
(73) Patentinhaber: VOLLMER WERKE Maschinenfabrik GmbH, 88400 Biberach/Riss (DE)
(72) Erfinder: BERGBAUR, Michael, 8322 Graberberg/St. Marein b. Graz (AT)
(74) Vertreter: Thum, Bernhard

(56) Entgegenhaltungen:
- CH-A5- 666 436
- DE-A1-102011 053 980
- DE-U1- 8 915 435
- US-A- 2 902 800

## Beschreibung

Die vorliegende Erfindung betrifft eine Vorrichtung zum Abstützen eines von einer Werkzeugmaschine zu bearbeitenden Werkstücks mit:
- wenigstens einem Abstützelement, das mit dem abzustützenden Werkstück in Kontakt bringbar ist,
- wenigstens einer ersten Positioniereinrichtung zum Positionieren des wenigstens einen Abstützelements in zumindest einer ersten Richtung, und
- wenigstens einer zweiten Positioniereinrichtung zum Positionieren des wenigstens einen Abstützelements in zumindest einer zweiten Richtung, wobei die erste Richtung und die zweite Richtung zueinander senkrecht verlaufen.

Aus dem Stand der Technik sind verschiedene Vorrichtungen zum Abstützen eines zu bearbeitenden Werkstücks bekannt. Derartige Vorrichtungen werden unter anderem auch als Lünetten bezeichnet.

DE 10 2011 053 980 A1 offenbart eine Lünette mit einem Stützkörper, in dem eine Stütznut in einer Erstreckungsrichtung verläuft. In der Stütznut kann ein zylindrisches Werkstück abgestützt werden. Die Lünette weist zur Ausrichtung und Positionierung der Stütznut mehrere Einstellachsen auf, die von zwei linearen Einstellachsen und einer Schwenkeinstellachse gebildet werden. Jede Einstellachse dient zur Relativverstellung zweier Einstellteile in einer betreffenden Einstellrichtung. Um ein versehentliches Verstellen einer Einstellachse zu verhindern, ist jeder Einstellachse jeweils ein Klemmmittel zugeordnet. Jedes Klemmmittel kann eine Klemmkraft zwischen den beiden Einstellteilen einer Einstellachse erzeugen, wobei die Klemmkraft quer bzw. rechtwinklig zur Einstellrichtung der betreffenden Einstellachse ausgerichtet ist.

DE 199 62 796 A1 offenbart eine Vorrichtung zum Schleifen von Werkzeugen. Die Vorrichtung umfasst eine Lünette zur Führung des zu schleifenden Werkzeugs. Die Vorrichtung umfasst zwei Führungsbahnen mit zwei inneren Seitenflächen, die zur
Längsachse des zu schleifenden Werkzeugs parallel verlaufen und einen Winkel zur Aufnahme des zu schleifenden Werkzeugs einschließen. Das zu schleifende Werkzeug liegt mit seiner kreisförmigen Außenumfangsfläche zumindest an zwei der inneren Seitenflächen der Führungsbahnen an.

EP 0 299 915 A2 offenbart eine Einrichtung zum Bearbeiten eines Werkstücks. Ein Werkstück ist in einer Zange eingespannt und liegt mit seinem Schaft und mit seinem zu bearbeitenden Abschnitt je auf einem unabhängig einstellbaren Auflager auf. Diese Auflager können in mehreren Richtungen feineingestellt werden.

WO 2006/108316 A1 offenbart eine einstellbare Halterungsvorrichtung, bei der über die Betätigung verschiedener Hebel Schwenkbewegungen von verlagerbaren Komponenten veranlasst werden können.

DE 10 2005 006 242 A1 offenbart eine Schleifmaschine. Diese weist ein Maschinenbett und eine an diesem angeordnete, das zu bearbeitende Werkstück aufnehmende Werkstückspindel sowie eine neben dem Werkstück angeordnete Schleifstation mit einer Schleifspindel zur Aufnahme eines Schleifwerkzeugs auf und ist mit einem am Maschinenbett zur Unterstützung des Werkstücks an der Schleifstelle angeordneten Werkstückführungssystem versehen. Das Werkstückführungssystem weist eine Werkstückaufnahme und eine Einstellvorrichtung auf, mit der die Werkstückaufnahme in ihrem Höhenabstand und Seitenabstand von der Achse der Werkstückspindel bzw. des darin eingespannten Werkstückes einstellbar ist. Die Einstellvorrichtung weist Festlagerkörper und an Widerlagern angebrachte Stellglieder in Form von Piezoantrieben auf, die mit den Festlagerkörpern zusammenwirken.

DE 89 15 435 U1 offenbart ein Werkstücklager und ein Drehfutter. Axial vor einer Futteraufnahme des Drehfutters befinden sich die ein Werkstück radial abstützenden Werkstücklager, die axial fluchtend mit Abstand voneinander an einem stillstehenden Lagerkörper vorgesehen sind. Der Lagerkörper ist auf einem Maschinenbett in Bezug auf eine Achse der Drehmaschinenspindel einstellbar. Bei stillstehendem Drehfutter senkt sich ein verschiebbarer Futterkörper unter der Wirkung seines Gewichtes im Drehfutter ab. Zum Anheben des Futterkörpers ist unter dem Drehfutter ein stillstehendes Hubwerk mit einem radial zur Futterachse heb-und senkbaren Hubkopf angeordnet. Eine Stirnscheibe besitzt einen durch eine Aussparung im Futtermantel radial aus dem Futtergehäuse vorstehenden Stift, der in einer Bohrung der Stirnscheibe sitzt. In derjenigen Drehstellung des Drehfutters, in der der Stift senkrecht nach unten gerichtet ist, steht der Stift über dem Hubwerk und ist in seiner Längsrichtung durch Anschlag am Hubkopf durch diesen heb-und senkbar.

CH 666 436 A5 offenbart eine Führung. Die Position eines Schlittens kann durch die Lage einer keilförmigen Kulisse bestimmt werden, die mittels einer Spindel verstellt werden kann.

Die voranstehend beschriebenen und aus dem Stand der Technik bekannten Vorrichtungen haben allesamt einen relativ komplexen Aufbau mit einer großen Anzahl von Einzelteilen.

Es ist eine Aufgabe der vorliegenden Erfindung eine Vorrichtung zum Abstützen von zu bearbeitenden Werkstücken mit einem einfacheren und kompakten Aufbau bereitzustellen, der wenig Bauraum einnimmt, und eine spielfreie Einstellung der Position des Abstützelements ermöglicht.

Diese Aufgabe wird mit einer Vorrichtung mit den in Anspruch 1 angegebenen Merkmalen gelöst.

Weitere Ausführungsformen sind in den beigefügten abhängigen Ansprüchen angegeben.

Bei der erfindungsgemäßen Vorrichtung weist die erste Positioniereinrichtung und/oder die zweite Positioniereinrichtung wenigstens einen Exzenter und wenigstens einen Schlitten auf, an dem das wenigstens eine Abstützelement angeordnet ist, wobei der wenigstens eine Schlitten mittels des wenigstens einen Exzenters in der ersten Richtung oder der zweiten Richtung verlagerbar ist, wobei der Hub des Schlittens in der ersten Richtung oder der zweiten Richtung über eine Anschlaganordnung einstellbar ist.

Durch die Einstellbarkeit der Position des wenigstens einen Abstützelements mittels einer von dem Exzenter ausgelösten Verlagerung des Schlittens in der ersten oder zweiten Richtung kann die Einstellung der Position spielfrei und damit hochpräzise erfolgen. Mit anderen Worten wird das Abstützelement mit dem Schlitten über den Exzenter an das abzustützende Werkstück angenähert und mit dem abzustützenden Werkstück in Kontakt gebracht, um das Werkzeug abstützen zu können. Ferner hält der Exzenter den wenigstens einen Schlitten auch in der gewünschten Position zum Abstützen des Werkstücks. Durch die erfindungsgemäße Art der Positionierung wird darüber hinaus ein einfacher, kompakter und damit platzsparender Aufbau der Vorrichtung zum Abstützen eines von der Werkzeugmaschine zu bearbeitenden Werkstücks erreicht.

Die wenigstens eine Anschlaganordnung dient zum Einstellen des Hubs des wenigstens einen Schlittens. Dadurch kann der Schlitten in verschiedene Positionen zum Abstützen des Werkstücks verlagert werden. Anders ausgedrückt kann die Abstützposition des wenigstens einen Abstützelements in der ersten Richtung oder der zweiten Richtung mittels der wenigstens einen Anschlaganordnung stufenlos eingestellt bzw. verändert werden, um unterschiedliche Werkstücke mit unterschiedlichen Durchmessern abstützen zu können. Der wenigstens eine Exzenter hält während der Bearbeitung des Werkstücks den Schlitten an der über die Anschlaganordnung eingestellten Position zur Abstützung des Werkstücks.

Gemäß der Erfindung wirken der wenigstens eine Exzenter und der wenigstens eine Schlitten, an dem das Abstützelement angebracht ist, zur Einstellung der Position des wenigstens einen Abstützelements zusammen. Der Exzenter hält den wenigstens einen Schlitten und damit auch das wenigstens eine Abstützelement in der zur Abstützung des Werkstücks eingestellten Position. Der Exzenter wirkt somit auch während des Bearbeitungsvorgangs an dem zu bearbeitenden Werkstück auf den Schlitten ein, wodurch das wenigstens eine Abstützelement in der eingestellten Position gehalten wird. Zusätzliche Fixiermittel sind in dem Fall zum Einhalten der eingestellten Position nicht notwendig.

Gemäß einer Ausführungsform der Erfindung kann die zweite Positioniereinrichtung an der ersten Positioniereinrichtung angebracht und über die erste Positioniereinrichtung in der ersten Richtung verlagerbar sein. Die Position der zweite Positioniereinrichtung und des daran angebrachten Abstützelements kann in der ersten Richtung über die erste Positioniereinrichtung eingestellt und gehalten werden, wobei die erste Positioniereinrichtung einen Exzenter, einen Schlitten und eine Anschlaganordnung aufweisen kann. In der zweiten Richtung kann die Position des Abstützelements von der zweiten Positioniereinrichtung bzw. über den Exzenter, den Schlitten und die Anschlaganordnung eingestellt und gehalten.

Der wenigstens eine Exzenter kann über wenigstens einen Motor angetrieben werden. Der Exzenter kann über wenigstens eine Welle und/oder wenigstens einen Riementrieb mit dem Motor gekoppelt sein. Der Motor kann den Riementrieb antreiben. Der Riementrieb kann über die Welle den Exzenter antreiben. Der Exzenter kann von dem Motor beispielsweise in zwei Drehrichtungen angetrieben werden, um den Schlitten zwischen der Position zum Abstützen des Werkstücks und einer Freigabeposition, in der das Abstützelement nicht an dem Werkstück anliegt, hin und her verlagern zu können.

Die Antriebswelle kann sich zumindest abschnittsweise durch die erste Positioniereinrichtung erstrecken. Die Antriebswelle kann direkt bzw. unmittelbar mit dem Exzenter gekoppelt sein. Der Exzenter kann einen Wellenabschnitt aufweisen, der sich zumindest abschnittsweise in die erste Positioniereinrichtung hinein erstreckt. Der Exzenter kann innerhalb der ersten Positioniereinrichtung mit der Antriebswelle gekoppelt bzw. verbunden sein. Der Exzenter kann mittels seines Wellenabschnitts an der ersten Positioniereinrichtung, beispielsweise über wenigstens ein Wälzlager und/oder Gleitlager gelagert sein. Der Exzenter kann zumindest abschnittsweise in dem wenigstens einen Schlitten aufgenommen sein. Der Schlitten kann dazu eine Ausnehmung aufweisen, die zum Zusammenwirken mit dem Exzenter ausgebildet ist. Die Ausnehmung kann wenigstens einen Abschnitt aufweisen, der derart ausgebildet ist, dass eine Drehbewegung des Exzenters in eine Bewegung des Schlittens in der zweiten Richtung, d.h. in der Hubrichtung des Schlittens, umgesetzt wird. Dieser Abschnitt der Ausnehmung in dem Schlitten kann beispielsweise mit einer vorbestimmten Kontur, beispielsweise gewölbt oder bogenförmig ausgebildet sein.

Die erste Positioniereinrichtung oder die zweite Positioniereinrichtung kann wenigstens eine Führungseinrichtung aufweisen. Die Führungseinrichtung kann die Hubbewegung des Schlittens führen. Die Führungseinrichtung kann zwei Führungsschienen aufweisen, die mit komplementären Führungsabschnitten an dem Schlitten zusammen wirken. Die beiden Führungsschienen können an der ersten Positioniereinrichtung angebracht sein.

Die folgenden Ausführungen beziehen auf die zweite Positioniereinrichtung, die einen Exzenter, einen Schlitten und eine Anschlaganordnung aufweist. Die folgenden Ausführungen gelten jedoch auch analog für die erste Positioniereinrichtung, wobei der Schlitten in diesem Fall in der ersten Richtung bewegt und der Hub des Schlittens in der ersten Richtung begrenzt werden würde.

Die wenigstens eine Anschlaganordnung kann wenigstens eine Keilanordnung aufweisen, die den Hub des Schlittens einstellt. Die Keilanordnung kann wenigstens einen ersten Keil und wenigstens einen zweiten Keil aufweisen. Der erste Keil und der zweite Keil können in der zweiten Richtung relativ zueinander verlagerbar sein.

Der erste Keil kann an der ersten Positioniereinrichtung angeordnet sein. Der zweite Keil kann an dem wenigstens einen Schlitten der zweiten Positioniereinrichtung vorgesehen sein. Der zweite Keil kann zusammen mit dem Schlitten über den Exzenter verlagerbar sein. Der zweite Keil kann einstückig mit dem Schlitten ausgebildet sein.

Zur Begrenzung des Hubs des Schlittens können der erste Keil und der zweite Keil mit ihren Keilflächen aneinander in Anlage bringbar sein. Der erste Keil und der zweite Keil können relativ zueinander verlagert werden, bis die Keilflächen der beiden Keile aneinander anliegen. Sobald die beiden Keile mit ihren Keilflächen aneinander anliegen, ist keine weitere Bewegung des Schlittens in der zweiten Richtung mehr möglich, d.h. die Hubbewegung des Schlittens ist beendet. Der erste Keil kann in der zweiten Richtung unverlagerbar an der ersten Positioniereinrichtung angebracht sein. Der zweite Keil kann mittels des Exzenters zusammen mit dem Schlitten in der zweiten Richtung relativ zu dem ersten Keil verlagert werden, bis die Keilflächen der beiden Keile aneinander anschlagen. Der erste Keil bildet somit einen Anschlag für den in der zweiten Richtung verlagerbaren zweiten Keil. Der Hub des Schlittens kann somit über die Keilanordnung eingestellt und begrenzt werden.

Um den Hub des Schlittens einstellen zu können, können der erste Keil oder der zweite Keil in der ersten Richtung quer zur zweiten Richtung verlagert werden. Der erste Keil und der zweite Keil können in einer Richtung quer zur zweiten Richtung bzw. zur Hubrichtung des Schlittens verlagert werden, um das Ausmaß des Hubs des Schlittens einzustellen. Das Ausmaß des Hubs des Schlittens hängt dabei maßgeblich von der Position des ersten Keils oder des zweiten Keils in der ersten Richtung quer zur zweiten Richtung ab. In Abhängigkeit der Position beispielsweise des ersten Keils in der ersten Richtung kann der Hub des Schlittens verringert oder vergrößert werden, um die Position zum Abstützen des Werkstücks einstellen zu können.

Die Anschlaganordnung kann wenigstens eine Verriegelungseinrichtung aufweisen, die zum Verriegeln der Keilanordnung in einer vorbestimmten Position dient.

Die Verriegelungseinrichtung kann wenigstens ein verlagerbares Element aufweisen. Das verlagerbare Element kann zwischen einer Freigabeposition, in der der erste Keil verlagerbar ist, und einer Verriegelungsposition verlagert werden, in der der erste Keil in einer vorbestimmten Position fixiert ist. Die Verriegelungseinrichtung wird betätigt, wenn die Position des ersten Keils in der ersten Richtung und damit der Hub des Schlittens eingestellt wurden. Über die Verriegelungseinrichtung kann der erste Keil in seiner eingestellten Position in der ersten Richtung fixiert werden. Befindet sich die Verriegelungseinrichtung in der Verriegelungsposition, ist der erste Keil auch in der ersten Richtung unverlagerbar. Die eingestellte Position des ersten Keils gibt an, wann bzw. an welcher Position der Hub des Schlittens begrenzt bzw. beendet werden soll. Das wenigstens eine verlagerbare Element kann eine Welle sein. Die Welle kann beispielsweise einen Exzenterabschnitt aufweisen, der eine Fixierung des ersten Keils in seiner eingestellten Position zulässt. Der Exzenterabschnitt kann beispielsweise den ersten Keil verklemmen, um diesen in seiner eingestellten Position zu fixieren.

Die wenigstens eine Anschlaganordnung kann ein Gehäuse aufweisen. Die Keilanordnung kann wenigstens ein Anschlagelement aufweisen, an dem der erste Keil angeordnet ist. Das Anschlagelement kann in der Verriegelungsposition zwischen dem verlagerbaren Element und dem Gehäuse der Anschlaganordnung geklemmt werden. Das Anschlagelement kann einen Vorsprung aufweisen, der zwischen dem verlagerbaren Element und dem Gehäuse geklemmt wird. Durch die Klemmung des Anschlagelements zwischen dem verlagerbaren Element und dem Gehäuse wird der erste Keil in seiner eingestellten Position fixiert. Ist das wenigstens eine verlagerbare bzw. verschwenkbare Element eine Welle mit einem Exzenterabschnitt, kann die Welle in der Verriegelungsposition den ersten Keil gegen das Gehäuse verklemmen und in der Freigabeposition eine Verlagerung des ersten Keils in der ersten Richtung zulassen. Das verlagerbare Element kann über einen Hebel betätigt werden. Der Hebel kann in der Verriegelungsposition des verlagerbaren Elements arretiert werden. Dazu kann der Hebel eine Ausnehmung aufweisen, die mit einem Zapfen zusammenwirkt.

Die Anschlaganordnung kann wenigstens eine Spindel aufweisen. Der erste Keil kann über die Spindel in der ersten Richtung verlagert werden. Die Spindel kann einen Gewindeabschnitt aufweisen. Der erste Keil kann eine Öffnung aufweisen, die mit einem Innengewinde versehen ist. Das Innengewinde des ersten Keils kann mit dem Gewindeabschnitt der Spindel zum Verlagern des ersten Keils zusammenwirken. Die Spindel kann beispielsweise wenigstens einen Betätigungsabschnitt zum Verlagern des ersten Keils aufweisen, der beispielsweise mit einem Inbusschlüssel, Schraubenschlüssel oder einem Schraubendreher betätigbar ist.

Der Exzenter kann wenigstens eine Laufrolle aufweisen. Die wenigstens eine Laufrolle kann drehbar an dem Exzenter gelagert sein. Die Laufrolle kann mit dem Exzenter zum Verlagern des Schlittens zusammenwirken.

Der Schlitten kann wenigstens eine Ausnehmung aufweisen. In der Ausnehmung kann der Exzenter zumindest abschnittsweise aufgenommen werden. Die Wandung der Ausnehmung kann mit dem Exzenter zur Verlagerung des Schlittens zusammenwirken. Die Wandung kann einen gewölbten oder bogenförmigen Abschnitt aufweisen.

Die Laufrolle des Exzenters kann mit ihrer Außenumfangsfläche zumindest abschnittweise mit der Wandung der Ausnehmung des Schlittens in Kontakt stehen. Die Laufrolle kann durch die Exzenterbewegung des Exzenters entlang der Wandung der Ausnehmung bewegt werden. Durch die Bewegung des Exzenters mit der daran angeordneten Laufrolle kann der Schlitten hin und her bewegt werden. Die Ausnehmung ist vorzugsweise mit einer derartigen Kontur gestaltet, dass aus der Bewegung des Exzenters mit der daran angeordneten Laufrolle in Wechselwirkung mit der Kontur der Ausnehmung in jeder Position die resultierende Kraft zur Betätigung des Schlittens, insbesondere die vertikal nach oben wirkende resultierende Kraft, im Wesentlichen konstant bleibt.

Die Vorrichtung kann eine Abstützvorrichtung für das abzustützende Werkstück aufweisen, die relativ zu der ersten und/oder der zweiten Positioniereinrichtung verlagerbar ist. Diese zusätzliche Abstützvorrichtung kann zum Abstützen des Schafts eines zu bearbeitenden rotationssymmetrischen Werkstücks vorgesehen sein. Die zusätzliche Abstützvorrichtung kann sich nahe an einer Einspannvorrichtung der Werkzeugmaschine für das zu bearbeitende Werkstück befinden. Die Abstützvorrichtung und die zweiten Positioniereinrichtung können in einer dritten Richtung relativ zueinander verlagerbar sein. Die Abstützvorrichtung kann an der ersten Positioniereinrichtung angeordnet sein. Die erste Positioniereinrichtung kann mit Führungsausnehmungen versehen sein, die eine Relativbewegung zwischen der Abstützvorrichtung und der zweiten Positioniereinrichtung zulassen. Die Abstützvorrichtung kann derart aufgebaut bzw. ausgebildet sein, dass sie das zu bearbeitende Werkstück zumindest abschnittsweise umschließt.

Die erste Positioniereinrichtung oder die zweite Positioniereinrichtung kann derart ausgebildet sein, dass die Position des wenigstens einen Abstützelements in der ersten Richtung durch eine elastische Deformation wenigstens eines elastisch deformierbaren Abschnitts einstellbar ist.

Die erste Positioniereinrichtung oder die zweite Positioniereinrichtung kann wenigstens ein elastisch deformierbares Element aufweisen. Das elastisch deformierbare Element kann einen stationären Abschnitt und einen zu dem stationären Abschnitt relativ verlagerbaren Abschnitt aufweisen. Das elastisch deformierbare Element kann zwischen seinem stationären Abschnitt und dem verlagerbaren Abschnitt wenigstens einen Abschnitt aufweisen, der eine reduzierte Steifigkeit aufweist, und eine Relativbewegung zwischen dem stationären Abschnitt und dem verlagerbaren Abschnitt unter einer elastischen Deformation zulässt.

Der stationäre Abschnitt und der relativ verlagerbare Abschnitt des elastisch deformierbaren Elements der ersten oder der zweiten Positioniereinrichtung können über wenigstens ein Biegeelement miteinander verbunden sein. Das wenigstens eine Biegeelement kann einen elastisch deformierbaren Abschnitt bilden. Das Biegeelement weist verglichen mit dem stationären Abschnitt und dem bewegbaren Abschnitt eine reduzierte Biegesteifigkeit auf, sodass eine elastische Deformation des Biegeelements möglich wird. Aufgrund dieser elastischen Deformation kann der bewegbare Abschnitt relativ zu dem stationären Abschnitt verlagert werden. Beispielsweise kann eine derartige reduzierte Biegesteifigkeit des Biegeelements durch eine Reduzierung des Querschnitts des elastisch deformierbaren Elements im Bereich des wenigstens einen Biegeelements erreicht werden. Anders ausgedrückt weisen der stationäre Abschnitt und der relativ verlagerbare Abschnitt verglichen mit der Biegesteifigkeit des Biegeelements eine erhöhte Biegesteifigkeit auf. Eine Reduzierung der Biegesteifigkeit kann beispielsweise durch Ausnehmungen, Bohrungen und Nuten im Bereich zwischen dem verlagerbaren Abschnitt und dem stationären Abschnitt, d.h. im Bereich des Biegeelements, des elastisch deformierbaren Elements erreicht werden.

Der stationäre Abschnitt, der relativ verlagerbare Abschnitt und das Biegeelement des elastisch deformierbaren Elements der ersten Positioniereinrichtung können einstückig ausgebildet sein. Da das elastisch deformierbare Element der ersten Positioniereinrichtung ein Einzelteil darstellt und dennoch eine Positionierung des einen Abstützelements erlaubt, kann die Vorrichtung gemäß dieser Ausführungsform verglichen mit den Vorrichtungen gemäß dem Stand der Technik mit erheblich weniger Teilen ausgeführt werden und benötigt deutlich weniger Bauraum.

Zur Abstützung des Werkstücks und zur Positionierung des Abstützelements ist jedoch die von der Vorrichtung gemäß der Erfindung bereitgestellte Einstellbarkeit der Position des Abstützelements in vertikaler Richtung (erste Richtung) und in einer Richtung (zweite Richtung) quer zur Längsachse des Werkstücks wesentlich bzw. ausschlaggebend.

Die erste oder die zweite Positioniereinrichtung kann wenigstens eine Stellschraube zum Einstellen der Position des Abstützelements aufweisen. Die Stellschraube der ersten Positioniereinrichtung oder der zweiten Positioniereinrichtung kann dementsprechend dazu dienen, den verlagerbaren Abschnitt des elastischen deformierbaren Elements der ersten Positioniereinrichtung relativ zu dem stationären Abschnitt des elastischen Elements zu verlagern.

Gemäß einer Ausführungsform der Erfindung kann zumindest die erste Positioniereinrichtung mit einer Werkzeugmaschine koppelbar bzw. verbindbar sein. Die erste Positioniereinrichtung kann beispielsweise mit einem Achsantrieb einer Achse der Werkzeugmaschine gekoppelt werden. Die erste Positioniereinrichtung kann mit einem Gehäuse des Achsantriebs gekoppelt werden. Die erste Positioniereinrichtung kann in das Gehäuse des Achsantriebs eingeschoben oder entlang des Gehäuses des Achsantriebs verschoben werden, um die Vorrichtung an Werkstücke mit unterschiedlichen Längen anpassen zu können.

Die vorliegende Erfindung betrifft ferner eine Werkzeugmaschine mit einer Vorrichtung der voranstehend beschriebenen Art.

Im Folgenden wird eine Ausführungsform der vorliegenden Erfindung beispielhaft mit Bezug auf die beigefügten Figuren beschrieben. Es stellen dar:
- Figur 1: eine perspektivische Ansicht der erfindungsgemäßen Vorrichtung in einem an einer Werkzeugmaschine angebrachten Zustand;
- Figur 2: einen vergrößerten Ausschnitt aus der Ansicht gemäß Figur 1;
- Figur 3: eine weitere perspektivische Ansicht der Vorrichtung gemäß der Erfindung;
- Figur 4: eine Schnittansicht der Vorrichtung gemäß der Erfindung;
- Figur 5: eine weitere Schnittansicht der Vorrichtung gemäß der Erfindung;
- Figur 6: eine Seitenansicht der Vorrichtung gemäß der Erfindung;
- Figuren 7 und 8: weitere Schnittansichten der Vorrichtung gemäß der Erfindung;
- Figur 9: eine weitere Ansicht der Vorrichtung gemäß der Erfindung in einem an einer Werkzeugmaschine angebrachten Zustand.

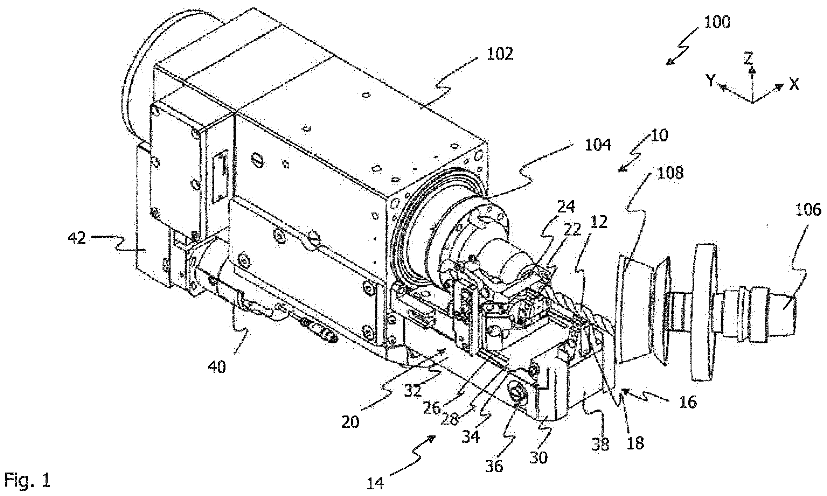

Figur 1 zeigt eine perspektivische Ansicht der Vorrichtung 10 in einem an einer Werkzeugmaschine 100 angebrachten Zustand. Von der Werkzeugmaschine 100 sind in Figur 1 eine erste Achse 102 bzw. ein erster Achsantrieb 102 und eine Einspannvorrichtung 104 gezeigt, in die das Werkstück 12 zur Bearbeitung eingespannt werden kann. Ferner ist eine zweite Achse 106 der Werkzeugmaschine 100 gezeigt, an der eine Schleifscheibe 108 angebracht ist. Die Schleifscheibe 108 bearbeitet das Werkstück 12 in der Einspannvorrichtung 104 der ersten Achse 102 der Werkzeugmaschine 100. Die Achsen 102 und 106 können derart angetrieben werden, dass die Schleifscheibe 108 und das Werkstück 12 rotieren. Die Achsen 102 und 106 können ferner relativ zueinander verlagert werden, um mittels der Schleifscheibe 108 eine vorbestimmte Kontur an dem Werkstück 12 ausbilden zu können. Weitere Komponenten der Werkzeugmaschine zu der Achse 106 sind der Einfachheit halber weggelassen.

Die Vorrichtung 10 weist eine erste Positioniereinrichtung 14 und eine zweite Positioniereinrichtung 16 zum Positionieren eines Abstützelements 18 auf. Das Abstützelement 18 dient zum Abstützen des Werkstücks 12 während der Bearbeitung des Werkstücks 12, beispielsweise mit der Schleifscheibe 108. Ferner umfasst die Vorrichtung 10 eine weitere Abstützeinrichtung 20, die den Schaft des Werkstücks 12 abstützen kann. Die Abstützeinrichtung 20 ist dementsprechend in unmittelbarer Umgebung der Einspannvorrichtung 104 angeordnet, um sich an den Schaft des Werkstücks 12 anlegen zu können. Die Abstützvorrichtung 20 weist ferner ein Abstützelement 22 und ein Führungselement 24 auf, die zwischen sich den Schaft des Werkstücks 12 aufnehmen. Die Abstützvorrichtung 20 und die zweite Positioniereinrichtung 16 sind mittels der ersten Positioniereinrichtung 14 in Y-Richtung relativ zueinander verlagerbar. Dazu sind an der ersten Positioniereinrichtung 14 Führungsausnehmungen 26 ausgebildet, die eine Relativbewegung zwischen der Abstützvorrichtung 20 und der ersten Positioniereinrichtung 14 führen. Die erste Positioniereinrichtung 14 kann in Y-Richtung in das Gehäuse der Achse 102 bzw. des Achsantriebs 102 eingeschoben werden, um den Abstand zwischen der Abstützvorrichtung 20 und der zweiten Positioniereinrichtung 16 einstellen zu können. Bei der Einstellung des Abstands zwischen der Abstützvorrichtung 20 und der zweiten Positioniereinrichtung 16 verbleibt die Abstützvorrichtung 20 an ihrer Position an der Einspannvorrichtung 104, während die erste Positioniereinrichtung 14 an der Abstützvorrichtung 20 entlang geführt wird, um den Abstand in Y-Richtung zwischen der Abstützvorrichtung 20 und der zweiten Positioniereinrichtung 16 einzustellen. Der Einstellweg für die Einstellung des Abstands zwischen der Abstützvorrichtung 20 und der zweiten Positioniereinrichtung 16 wird über die Erstreckung der Führungsausnehmungen 26 in Y-Richtung bestimmt. Die Abstützvorrichtung 20 und die zweite Positioniereinrichtung 16 können somit über die erste Positioniereinrichtung 14 aneinander angenähert bzw. voneinander entfernt werden, um Werkstücke mit unterschiedlichen Längen abstützen zu können. Auf diese Weise können sehr kurze Werkstücke und auch relativ lange Werkstücke abgestützt werden.

Die erste Positioniereinrichtung 14 weist einen stationären Abschnitt 28 und einen zu diesem stationären Abschnitt 28 verlagerbaren Abschnitt 30 auf. Der verlagerbare Abschnitt 30 ist mit dem stationären Abschnitt 28 über elastisch deformierbare Elemente 32 verbunden. Der verlagerbare Abschnitt 30 und die defomierbaren Elemente 32 sind abschnittsweise über einen Spalt 34 von dem stationären Abschnitt 28 getrennt. Der verlagerbare Abschnitt 30 kann unter elastischer Deformation der defomierbaren Elemente 32 mittels einer Stellschraube 36 relativ zu dem stationären Abschnitt 28 ausgelenkt werden. Das Ausmaß dieser Auslenkung wird über die Stellschraube 36 und über die elastisch deformierbaren Elemente 32 eingestellt bzw. gesteuert. Durch die Auslenkung des verlagerbaren Abschnitts 30 relativ zu dem stationären Abschnitt 28 kann der Spalt 34 unter elastischer Deformation der defomierbaren Elemente 32 verkleinert oder vergrößert werden. Die Auslenkung bzw. Verlagerung des verlagerbaren Abschnitts 30 erfolgt in der ersten Richtung, d.h. in X-Richtung. Die Vergrößerung bzw. Verkleinerung des Spalts 34 hängt davon ab, welche Position der verlagerbare Abschnitt 30 in X-Richtung einnimmt. An dem verlagerbaren Abschnitt 30 ist die zweite Positioniereinrichtung 16 mit dem daran angeordneten Abstützelement 18 angebracht. Über den verlagerbaren Abschnitt 30 kann somit die Position der zweiten Positioniereinrichtung 16 und damit des Abstützelements 18 in der ersten Richtung bzw. in X-Richtung eingestellt werden.

Die zweite Positioniereinrichtung 16 weist einen Schlitten 38 auf, an dem das Abstützelement 18 angeordnet ist. Der Schlitten 38 kann in der zweiten Richtung, d.h. in Z-Richtung, verlagert werden. Die erste Richtung (X-Richtung) und die zweite Richtung (Z-Richtung) verlaufen quer zueinander.

Ferner ist in Figur 1 ein Motor 40 erkennbar, der den Schlitten 38 zur Verlagerung in der zweiten Richtung antreiben kann. Der Motor 40 ist über einen in Figur 1 nicht gezeigten Riementrieb mit dem Schlitten 38 gekoppelt. Der Riementrieb ist in Figur 1 in dem Gehäuse 42 aufgenommen und wird von diesem verdeckt.

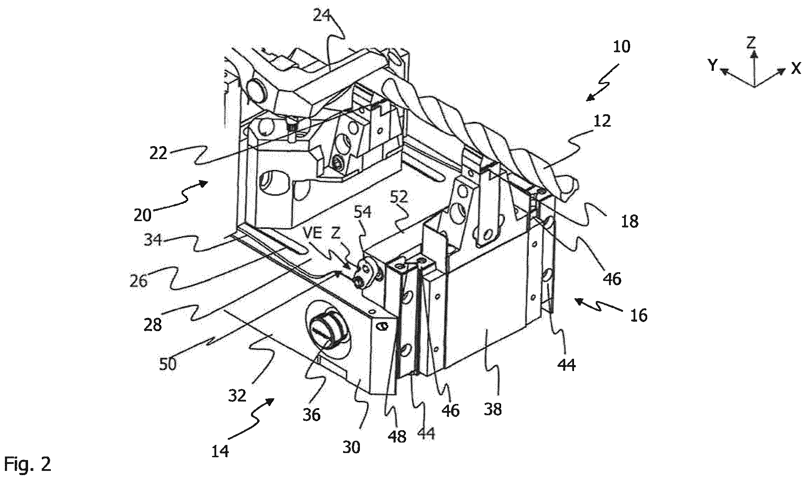

Figur 2 zeigt eine perspektivische Ansicht eines Teils der Vorrichtung 10.

In Figur 2 sind das Werkstück 12, die erste Positioniereinrichtung 14, die zweite Positioniereinrichtung 16 und die Abstützeinrichtung 20 erkennbar. An der ersten Positioniereinrichtung 14 sind Führungsschienen 44 angeordnet, die zur Führung des Schlittens 38 dienen. Dazu wirken die Führungsschienen 44 mit Führungsschienen 46 an dem Schlitten 38 zusammen. Die Führungsschienen 46 an dem verlagerbaren Abschnitt 30 der ersten Positioniereinrichtung 14 und die Führungsschienen 46 an dem Schlitten 38 weisen komplementäre Führungsprofile auf. Die Führungsschienen 44 weisen dazu V-förmige Ausnehmungen 48 auf, die mit V-förmigen Vorsprüngen (nicht gezeigt) an den Führungsschienen 46 zusammenwirken.

In Figur 2 ist ferner eine Anschlaganordnung 50 erkennbar, die zum Einstellen des Hubs des Schlittens 38 vorgesehen ist. Die Anschlaganordnung 50 weist ein Gehäuse 52 auf. Die Anschlaganordnung 50 weist eine Verriegelungseinrichtung VE auf, von der in Figur 2 ein Hebel 54 gezeigt ist. Der Hebel 54 weist eine Ausnehmung auf, die mit einem Zapfen Z in Eingriff bringbar ist, um die Verriegelungseinrichtung VE in der Verriegelungsposition halten zu können. Der Zapfen Z kann beispielsweise an dem Gehäuse 52 vorgesehen sein. Auf die Anschlaganordnung 50 wird im weiteren Verlauf näher eingegangen.

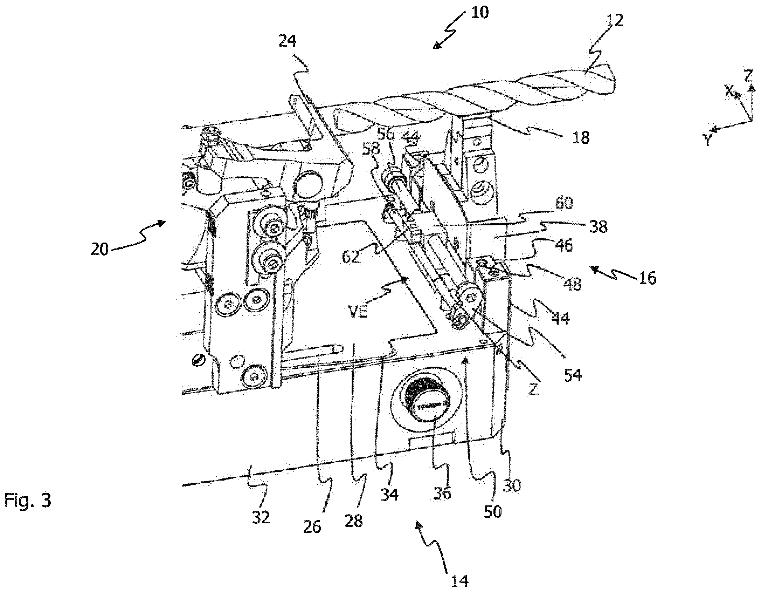

Figur 3 zeigt eine weitere perspektivische Ansicht eines Teils der Vorrichtung 10.

In Figur 3 ist die Anschlaganordnung 50 ohne Gehäuse 52 gezeigt. Die Anschlaganordnung 50 weist eine Spindel 56 und eine Welle 58 auf, die zur Führung eines Anschlagselements 60 dient und Teil der Verriegelungseinrichtung VE ist. Das Anschlagelement 60 ist an der Spindel 56 angeordnet. Die Position des Anschlagelements 60 ist in X-Richtung entlang der Spindel 56 einstellbar. Die Spindel 56 kann einen Abschnitt mit einem Außengewinde aufweisen (nicht gezeigt), der mit einem Innengewinde (nicht gezeigt) in dem Anschlagelement 60 zusammenwirkt. Die Welle 58 ist mit dem Hebel 54 verbunden. Die Welle 58 wirkt mit dem Hebel 54 zum Verriegeln des Anschlagelements 60 in einer vorbestimmten Position zusammen. Dazu ist an dem Anschlagelement 60 ein Vorsprung 62 vorgesehen, auf den die Welle 58 einwirkt. Die Welle 58 ist drehbar an dem verlagerbaren Abschnitt 30 der ersten Positioniereinrichtung 14 gelagert. Die Welle 58 kann einen Exzenterabschnitt (nicht gezeigt) aufweisen, so dass die Welle 58 zwischen einer Verriegelungsposition, in der das Anschlagelement 60 in einer vorbestimmten Position verriegelt wird, und einer Freigabeposition verlagerbar ist, in der das Anschlagelement 60 mittels der Spindel 56 in der ersten Richtung (X-Richtung) verlagert werden kann. Der Hebel 54 weist eine Ausnehmung auf, die mit einem Zapfen Z in Eingriff bringbar ist.

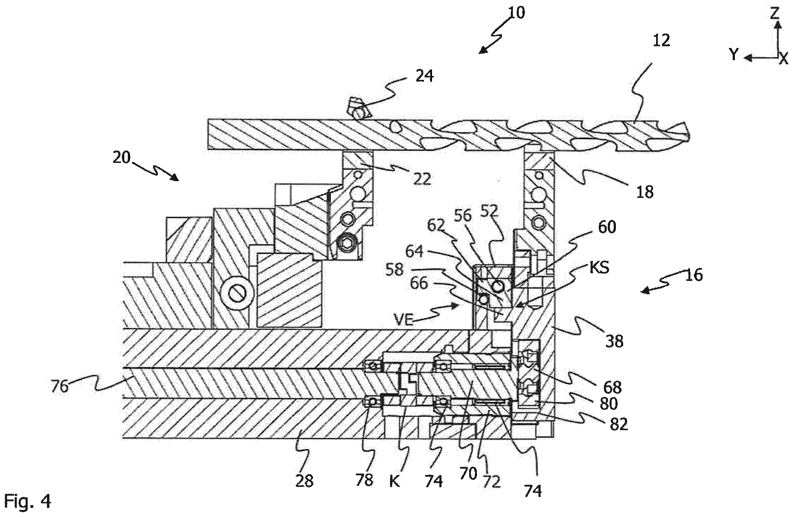

Figur 4 zeigt eine Teilschnittansicht der Vorrichtung 10.

Die Anschlaganordnung 50 weist das Anschlagelement 62 auf. An dem Anschlagelement 62 ist ein erster Keil 64 ausgebildet. An dem Schlitten 38 ist ein zweiter Keil 66 ausgebildet. Der erste Keil 64 und der zweite Keil 66 bilden eine Keilanordnung KS, über die der Hub des Schlittens 38 eingestellt werden kann. Der zweite Keil 66 ist einstückig mit dem Schlitten 38 ausgebildet.

In Figur 4 liegen die Keile 64 und 66 mit ihren nicht erkennbaren Keilflächen aneinander an. Der Schlitten 38 befindet sich somit in seiner Abstützposition, in der das Abstützelement 18 das Werkstück 12 abstützen kann. Die Keile 64 und 66 bestimmen und begrenzen dementsprechend den Hub des Schlittens 38. Die Keile 64 und 66 sind relativ zueinander verlagerbar. Der erste Keil 64 ist in Z-Richtung unverlagerbar an dem verlagerbaren Abschnitt 30 der ersten Positioniereinrichtung 14 angeordnet. Im Gegensatz dazu ist der zweite Keil 66 in Z-Richtung, d.h. in der zweiten Richtung, verlagerbar und kann mit dem zweiten Keil 66 in Anlage gebracht werden. Sind die beiden Keile 64 und 66 mit ihren Keilflächen aneinander in Anlage, wird der Hub des Schlittens 38 begrenzt. Der Schlitten 38 wird über einen Exzenter 68 angetrieben bzw. in Z-Richtung verlagert. Der Exzenter 68 kann den zweiten Keil 66 an dem ersten Keil 64 und damit das Abstützelement 18 in der Abstützposition halten. Der Exzenter 68 weist einen Wellenabschnitt 70 auf, der in der ersten Positioniereinrichtung 14 bzw. in dem stationären Abschnitt 28 der ersten Positioniereinrichtung 14 abschnittsweise aufgenommen und gelagert ist. Dazu ist ein Lagerelement 72 vorgesehen, an dem sich der Wellenabschnitt 70 des Exzenters 68 über Wälzlager 74 abstützen kann. Das Lagerelement 72 ist ringförmig ausgebildet und abschnittsweise in einer Öffnung in dem stationären Abschnitt 28 der ersten Positioniereinrichtung aufgenommen.

In Figur 4 ist das Anschlagelement 60 und damit der erste Keil 64 durch die Verriegelungseinrichtung VE in seiner mittels der Spindel 56 eingestellten Position fixiert worden. Die Welle 56 mit ihrem Exzenterabschnitt (nicht gezeigt) verklemmt den Vorsprung 62 des Anschlagelements 60 gegen das Gehäuse 52. Dadurch werden das Anschlagelement 60 und der Keil 64 in einer eingestellten Position fixiert.

Der Wellenabschnitt 70 des Exzenters 68 ist mit einer Antriebswelle 76 gekoppelt, die sich zumindest abschnittsweise durch den stationären Abschnitt 28 der ersten Positioniereinrichtung 14 hindurch erstreckt. Der Wellenabschnitt 70 des Exzenters 68 kann beispielsweise über eine Kupplung K mit der Antriebswelle 76 gekoppelt sein. Die Kupplung K kann beispielsweise eine Klauenkupplung sein. Die Antriebswelle 76 ist über ein Wälzlager 78 an dem stationären Abschnitt der ersten Positioniereinrichtung 14 gelagert.

Der Exzenter 68 weist eine Laufrolle 80 auf, die an dem Exzenter 68 drehbar gelagert ist. Die Laufrolle 80 ist an einem in X-Richtung rechten Ende des Exzenters 68 angeordnet. Der Exzenter 68 weist einen Wellenzapfen auf, an dem die Laufrolle 80 angeordnet ist. Der Wellenzapfen des Exzenters 68 ist jedoch in der in Figur 4 gezeigten Stellung des Exzenters 68 nicht erkennbar. Die Laufrolle 80 ist in einer Ausnehmung 82 in dem Schlitten 38 aufgenommen und steht mit der Wandung bzw. einem Abschnitt der Wandung der Ausnehmung 82 in Kontakt. Um die Exzenterbewegung des Exzenters 68 auf den Schlitten 38 übertragen zu können, wird die Laufrolle 80 entlang der Wandung der Ausnehmung 82 bewegt.

In Figur 4 befindet sich der Schlitten 38 in seiner Abstützposition, d.h. das Abstützelement 18 liegt am Werkstück 12 an. Die Stellung des Exzenters 68 in der Abstützposition hängt maßgeblich von der über die Anschlaganordnung 50 eingestellten Abstützposition bzw. von dem über die Anschlaganordnung 50 eingestellten Hub des Schlittens 38 ab. In der in Figur 4 gezeigten Abstützposition weist der Exzenter 68 im Wesentlichen in Z-Richtung und hält den Schlitten 38 in der Abstützposition an dem Werkstück 12.

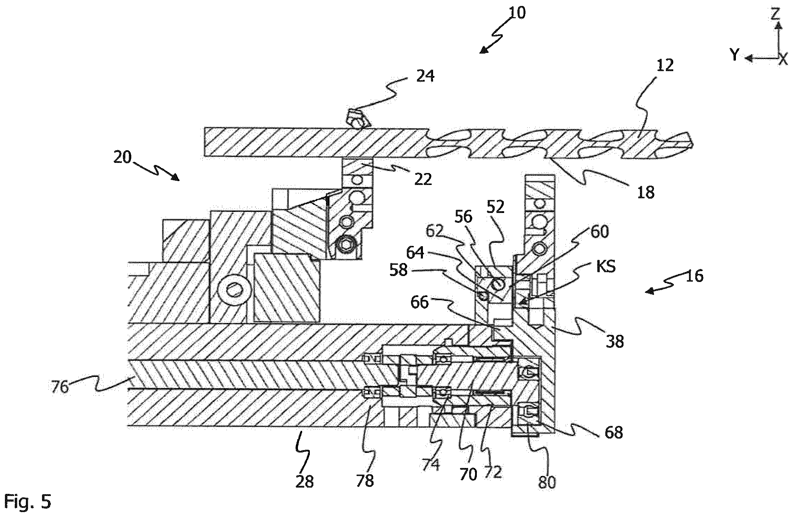

Figur 5 zeigt eine weitere Teilschnittansicht der Vorrichtung 10.

Der Exzenter 68 mit der daran angeordneten Laufrolle 80 zeigt in Figur 5 im Wesentlichen von dem Werkstück 12 weg. Der Schlitten 38 befindet sich somit in seiner unteren bzw. eingefahrenen Position. Dies ist auch anhand des Abstands zwischen dem Abstützelement 18 und dem Werkstück 12 erkennbar.

In Figur 5 ist der Wellenzapfen des Exzenters 68 gezeigt, an dem die Laufrolle 80 angeordnet ist. Die Laufrolle 80 ist über ein Wälzlager an dem Wellenzapfen des Exzenters 68 gelagert.

Bei einer vergleichenden Betrachtung der Figuren 4 und 5 werden die sich unterscheidenden Stellungen des Exzenters 68 bezüglich der Abstützposition des Schlittens 38 (Figur 4) und der eingefahrenen Position (Figur 5) erkennbar. Gleiches gilt für die Anschlaganordnung 50 bzw. die Keilanordnung KS. In Figur 4 liegen die Keile 64 und 66 aneinander an, wobei der Hub des Schlittens 38 durch den ersten Keil 64 begrenzt wird, der einen Anschlag für den zweiten Keil 66 bildet. In Figur 5, d.h. in der eingefahrenen Position des Schlittens 38, sind die Keile 64 und 66 in der zweiten Richtung voneinander beabstandet.

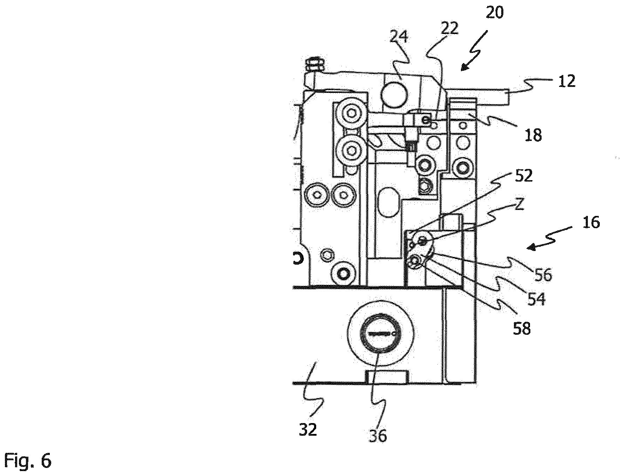

Figur 6 zeigt eine Seitenansicht eines Teils der Vorrichtung 10.

Figur 6 zeigt die Vorrichtung 10 in einem Zustand, in dem sehr kurze Werkstücke 12 abgestützt werden können. Die Abstützeinrichtung 20 und die zweite Positioniereinrichtung 16 sind mittels einer Verlagerung der ersten Positioniereinrichtung 14 in Y-Richtung, d.h. einer dritten Richtung, relativ aufeinander zu verlagert worden, sodass der Abstand zwischen der Abstützvorrichtung 20 und der zweiten Positioniereinrichtung 16 klein gewählt ist. Um den in Figur 6 dargestellten Zustand zu erreichen, wurde die erste Positioniereinrichtung 14 in das Gehäuse des Achsantriebs 102 hinein bzw. entlang des Gehäuses des Achsantriebs 102 verlagert, wodurch die zweite Positioniereinrichtung 16 in Richtung der Abstützvorrichtung 20 verlagert wurde (siehe Figur 1). Das Abstützelement 18 der zweiten Positioniereinrichtung 16 befindet sich in unmittelbarer Nähe zu dem Abstützelement 22 der Abstützeinrichtung 20. Insbesondere bei einer vergleichenden Betrachtung der Figuren 4 und 5 mit Figur 6 wird deutlich, wie sich der Abstand zwischen die Abstützeinrichtung 20 und der zweiten Positioniereinrichtung 16 in Y-Richtung verringert hat.

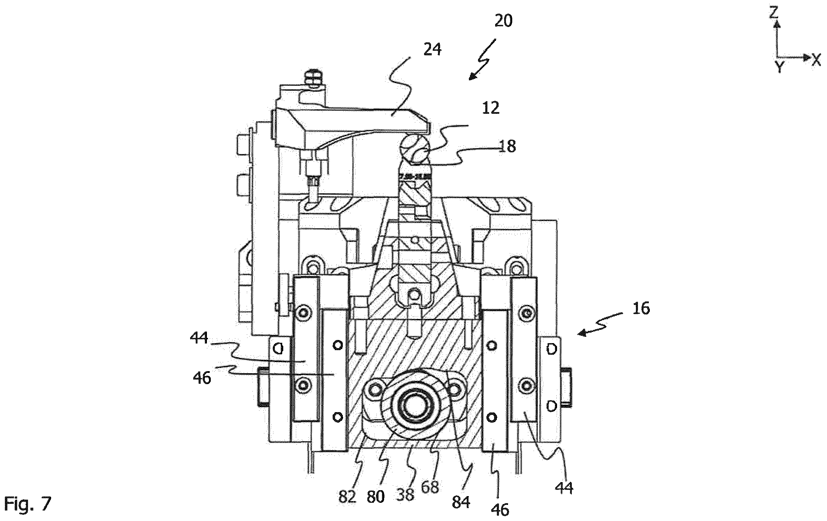

Figur 7 zeigt eine teilweise Schnittansicht der Vorrichtung 10, in der die zweite Positioniereinrichtung 16 im Schnitt dargestellt ist.

Der Schlitten 38 weist die Ausnehmung 82 auf, die einen gewölbten Abschnitt 84 an ihrer Wandung aufweist. Der gewölbte Abschnitt 84 kann mit der Laufrolle 80 des Exzenters 68 zum Verlagern des Schlittens 38 in Z-Richtung zusammenwirken. Die Ausnehmung 82 ist mit einer derartigen Kontur in dem gewölbten Abschnitt 84 gestaltet, dass aus der Bewegung des Exzenters 68 mit der daran angeordneten Laufrolle 80 in Wechselwirkung mit der Kontur 84 der Ausnehmung 82 im Rahmen der Bewegung in jeder Position die resultierende Kraft zur Betätigung des Schlittens 38, insbesondere die vertikal nach oben in Z-Richtung wirkende resultierende Kraft, im Wesentlichen konstant bleibt. Der Schlitten 38 kann in Z-Richtung zwischen der in Figur 4 dargestellten Position zum Abstützen des Werkstücks 12 und der in Figur 5 dargestellten eingefahrenen Position verlagert werden. Der Hub des Schlittens 38 kann stufenlos mit der Anschlaganordnung 50 eingestellt werden, sodass die Position zum Abstützen des Werkstücks 12 veränderbar bzw. einstellbar ist. Die Laufrolle 80 wandert in der Ausnehmung 82 entlang des gewölbten Abschnitts 84 der Wandung, um den Schlitten 38 in Z-Richtung bewegen zu können. Der Exzenter 68 mit der daran angeordneten Laufrolle 80 hält den Schlitten 38 auch in der Position zum Abstützen des Werkstücks 12. Die Position zum Abstützen des Werkstücks 12 kann entlang des gewölbten Abschnitts 84 der Ausnehmung 82 frei gewählt werden, sodass der Schlitten je nach eingestellter Abstützposition unterschiedlich große Hübe ausführen kann.

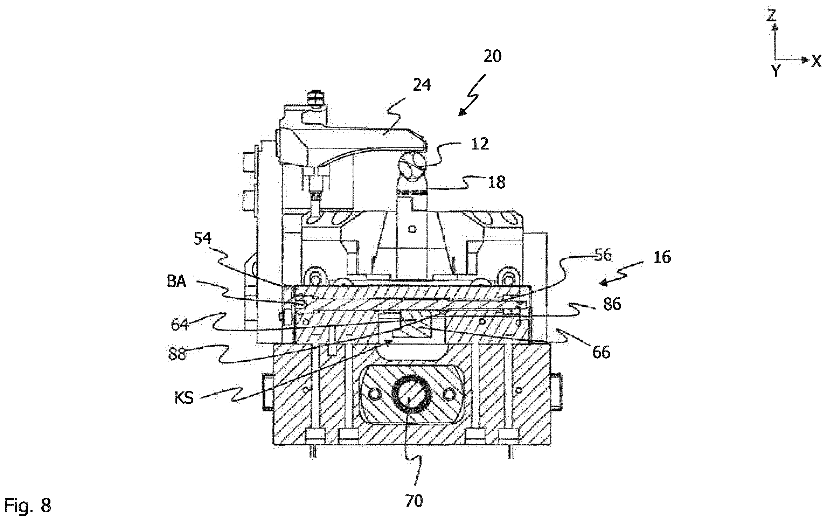

Figur 8 zeigt eine weitere Schnittansicht der Vorrichtung 10.

In Figur 8 ist die Keilanordnung KS mit dem ersten Keil 64 und dem zweiten Keil 66 gezeigt. Die Keile 64 und 66 liegen mit ihren schräg verlaufenden Keilflächen 86 und 88 aneinander an. Der Hub des Schlittens 38 kann über die Keile 64 und 66 eingestellt werden. Der erste Keil 64 ist entlang der Spindel 56 in X-Richtung zur Einstellung des Hubs des Schlittens 38 verlagerbar. Anders ausgedrückt verändert sich der Hub des Schlittens 38 in Abhängigkeit der Position des ersten Keils 64 relativ zu dem zweiten Keil 66. Der erste Keil 64 ist in Z-Richtung unverlagerbar und bildet somit einen Anschlag für den zweiten Keil 66, der zusammen mit dem Schlitten 38 in Z-Richtung verlagert werden kann. Der erste Keil 64 wird solange in X-Richtung verlagert, bis der gewünschte Hub des Schlittens 38 eingestellt ist. Dabei gilt, je weiter der erste Keil 64 in Figur 8 in X-Richtung nach rechts verlagert wird, umso kleiner wird der Hub des Schlittens 38. Je weiter der erste Keil 64 in Figur 8 gegen die X-Richtung nach links verlagert wird, umso größer wird der Hub des Schlittens 38.

Der erste Keil 64 kann über die Spindel 56 in X-Richtung verlagert werden. Dazu weist die Spindel 56 einen Gewindeabschnitt (nicht gezeigt) auf. Die Spindel 56 weist ferner einen Betätigungsabschnitt BA auf. Über den Betätigungsabschnitt BA kann die Spindel 56 zur Verlagerung des ersten Keils 64 gedreht werden. Gemäß Figur 8 ist der Betätigungsabschnitt BA mit einer Ausnehmung versehen, in die ein Inbusschlüssel eingreifen kann.

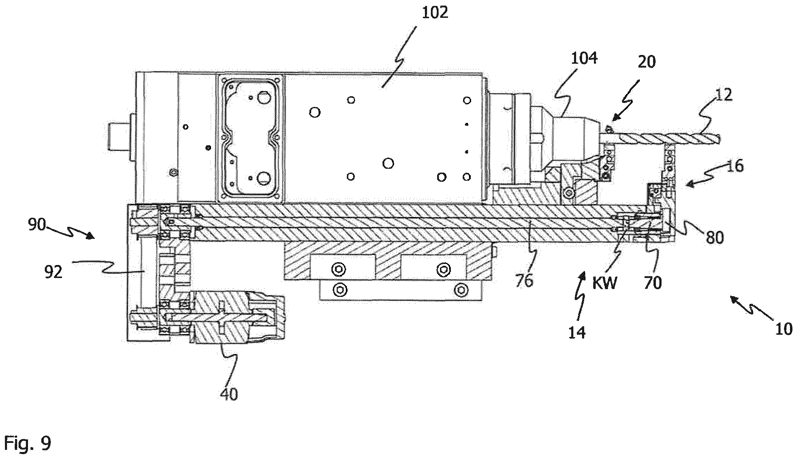

Figur 9 zeigt die Vorrichtung 10 in einem an der Achse 102 der Werkzeugmaschine 100 angebrachten Zustand. Der Exzenter 68 wird über die Antriebswelle 76 von einem Riementrieb 90 und dem Motor 40 angetrieben. Der Riemen 92 des Riementriebs 90 erstreckt sich zwischen einer Motorausgangswelle und der Antriebswelle 76 in Z-Richtung. Die Antriebswelle 76 erstreckt sich durch die erste Positioniereinrichtung 14 bis zu dem Wellenabschnitt 70 des Exzenters 68 und ist mit dem Wellenabschnitt 70 beispielsweise über eine Kupplung K gekoppelt. Über den Motor 40, den Riementrieb 90 und die Antriebswelle 76 kann der Schlitten 38 in Z-Richtung hin und her verlagert und auch in der gewünschten Position zum Abstützen des Werkstücks 12 gehalten werden. Der Motor 40 kann beispielsweise ein pneumatischer Motor oder ein Elektromotor sein.

Die Vorrichtung 10 gemäß der Erfindung weist einen kompakten Aufbau auf, der nur sehr wenig Bauraum benötigt. Durch die Vorrichtung gemäß der Erfindung wird eine spielfreie Einstellung der horizontalen und vertikalen Position des Abstützelements 18 zur Abstützung des Werkstücks 12 erreicht. Ferner können die horizontale Position und die vertikale Position des Abstützelements 12 mit den Positioniereinrichtungen 14 und 16 voneinander unabhängig eingestellt werden. Zudem kann über die Anschlaganordnung 50 die Position zum Abstützen des Werkstücks 12 stufenlos eingestellt bzw. verändert werden.

## Patentansprüche

1. Vorrichtung (10) zum Abstützen eines von einer Werkzeugmaschine (100) zu bearbeitenden Werkstücks (12), mit
- wenigstens einem Abstützelement (18), das mit dem abzustützenden Werkstück (12) in Kontakt bringbar ist,
- wenigstens einer ersten Positioniereinrichtung (14) zum Positionieren des wenigstens einen Abstützelements (18) in zumindest einer ersten Richtung (X),
- wenigstens einer zweiten Positioniereinrichtung (16) zum Positionieren des wenigstens einen Abstützelements (18) in zumindest einer zweiten Richtung (Z), wobei die erste Richtung (X) und die zweite Richtung (Z) zueinander senkrecht verlaufen,
**dadurch gekennzeichnet, dass** die erste Positioniereinrichtung und/oder die zweite Positioniereinrichtung (16) wenigstens einen Exzenter (68) und wenigstens einen Schlitten (38) aufweist, an dem das wenigstens eine Abstützelement (18) angeordnet ist, wobei der wenigstens eine Schlitten (38) mittels des wenigstens einen Exzenters (68) in der ersten Richtung (X) oder zweiten Richtung (Z) verlagerbar ist, wobei der Hub des Schlittens (38) in der ersten Richtung (X) oder der zweiten Richtung (Z) über eine Anschlaganordnung (50) einstellbar ist.

2. Vorrichtung (10) nach Anspruch 1,
wobei die zweite Positioniereinrichtung (16) an der ersten Positioniereinrichtung (14) angebracht und über die erste Positioniereinrichtung (14) in der ersten Richtung (X) verlagerbar ist.

3. Vorrichtung (10) nach Anspruch 1 oder 2,
wobei der Exzenter (68) über wenigstens einen Motor (40) antreibbar ist, wobei der Exzenter (68) über wenigstens eine Antriebswelle (76) und wenigstens einen Riementrieb (90) mit dem wenigstens einen Motor (40) gekoppelt ist,
wobei insbesondere der wenigstens eine Motor (40) den wenigstens einen Riementrieb (90) antreibt, der über die wenigstens eine Antriebswelle (76) den wenigstens einen Exzenter (68) antreibt,
wobei vorzugsweise sich die wenigstens eine Antriebswelle (76) zumindest abschnittsweise durch die erste Positioniereinrichtung (14) hindurch erstreckt.

4. Vorrichtung (10) nach einem der Ansprüche 1 bis 3,
wobei die erste Positioniereinrichtung (14) und/oder die zweite Positioniereinrichtung (16) wenigstens eine Führungseinrichtung (44, 46) aufweist, die die Hubbewegung des Schlittens (38) führt.

5. Vorrichtung (10) nach einem der Ansprüche 1 bis 4,
wobei die wenigstens eine Anschlaganordnung (50) wenigstens eine Keilanordnung (KS) aufweist, die den Hub des wenigstens einen Schlittens (38) einstellt,
wobei insbesondere die wenigstens eine Keilanordnung (KS) wenigstens einen ersten Keil (64) und wenigstens einen zweiten Keil (66) aufweist, wobei der erste Keil (64) und der zweite Keil (66) in der zweiten Richtung (Z) relativ zueinander verlagerbar sind,
wobei vorzugsweise zumindest der erste Keil (64) in der zweiten Richtung unverlagerbar an der ersten Positioniereinrichtung (14) angeordnet ist.

6. Vorrichtung (10) nach Anspruch 5,
wobei der zweite Keil (66) an dem wenigstens einen Schlitten (38) der zweiten Positioniereinrichtung (16) angeordnet und zusammen mit dem Schlitten (38) über den Exzenter (68) verlagerbar ist, und/oder
wobei zur Begrenzung des Hubs des Schlittens (38) der erste Keil (64) und der zweite Keil (66) mit ihren Keilflächen (86, 88) aneinander in Anlage bringbar sind.

7. Vorrichtung (10) nach einem der Ansprüche 5 oder 6,
wobei der erste Keil (64) oder der zweite Keil (66) zur Einstellung des Hubs des Schlittens (38) quer zur zweiten Richtung (Z) verlagerbar ist.

8. Vorrichtung (10) nach einem der Ansprüche 5 bis 7,
wobei die wenigstens eine Anschlaganordnung (50) wenigstens eine Verriegelungseinrichtung (VE) aufweist, die zum Verriegeln der wenigstens eine Keilanordnung (KS) in einer vorbestimmten Position dient,
wobei insbesondere die wenigstens eine Verriegelungseinrichtung (VE) wenigstens ein verlagerbares Element (58) aufweist, das zwischen einer Freigabeposition, in der der erste Keil (64) verlagerbar ist, und einer Verriegelungsposition verlagerbar ist, in der der erste Keil (64) in einer vorbestimmten Position fixiert ist.

9. Vorrichtung (10) nach Anspruch 8,
wobei die Keilanordnung (KS) wenigstens ein Anschlagelement (60) aufweist, an dem der erste Keil (64) angeordnet ist, wobei das wenigstens eine Anschlagelement (60) in der Verriegelungsposition zwischen dem wenigstens einen verlagerbaren Element (58) und einem Gehäuse (52) der Anschlaganordnung (50) geklemmt ist.

10. Vorrichtung (10) nach einem der Ansprüche 5 bis 9,
wobei der erste Keil (64) über wenigstens eine Spindel (58) in der zweiten Richtung (X) verlagerbar ist.

11. Vorrichtung (10) nach einem der Ansprüche 1 bis 10,
wobei der Exzenter (68) wenigstens eine drehbar gelagerte Laufrolle (80) aufweist.

12. Vorrichtung (10) nach einem der Ansprüche 1 bis 11,
wobei der Schlitten (38) wenigstens eine Ausnehmung (82) aufweist, in der der Exzenter (68) zumindest abschnittsweise aufgenommen ist, wobei die Wandung der Ausnehmung (82) mit dem Exzenter (68) zur Verlagerung des Schlittens (38) zusammenwirkt,
wobei vorzugsweise die wenigstens eine Laufrolle (80) des wenigstens einen Exzenters (68) mit ihrer Außenumfangsfläche zumindest abschnittweise mit der Wandung der wenigstens einen Ausnehmung (82) des Schlittens (38) in Kontakt steht,
wobei weiter vorzugsweise die Ausnehmung (82) vorzugsweise mit einer derartigen Kontur (84) gestaltet ist, dass aus der Bewegung des Exzenters (68) mit der daran angeordneten Laufrolle (80) in Wechselwirkung mit der Kontur (84) der Ausnehmung (82) die resultierende Kraft zur Betätigung des Schlittens (38), insbesondere die vertikal nach oben wirkende resultierende Kraft, im Wesentlichen konstant bleibt.

13. Vorrichtung (10) nach einem der Ansprüche 1 bis 12,
wobei die Vorrichtung eine Abstützvorrichtung (20) für das abzustützende Werkstück (12) aufweist, die relativ zu der ersten und/oder der zweiten Positioniereinrichtung (14, 16) verlagerbar ist.

14. Vorrichtung (10) nach einem der Ansprüche 1 bis 13,
wobei die erste Positionierungseinheit (14) oder die zweite Positioniereinrichtung (16) derart ausgebildet ist, dass die Position des wenigstens einen Abstützelements (18) in der ersten Richtung (X) oder in der zweiten Richtung (Z) durch eine elastische Deformation wenigstens eines elastisch deformierbaren Abschnitts (32) einstellbar ist,
wobei insbesondere zumindest die wenigstens eine erste Positionierungseinheit (16) mit einer Werkzeugmaschine (100) koppelbar ist.

15. Werkzeugmaschine (100) mit einer Vorrichtung (10) nach einem der Ansprüche 1 bis 14.

## Claims

1. A device (10) for supporting a workpiece (12) to be machined by a machine tool (100), having
- at least one support element (18) that may be brought into contact with the workpiece (12) to be supported,
- at least one first positioning device (14) for positioning the at least one support element (18) in at least one first direction (X),
- at least one second positioning device (16) for positioning the at least one support element (18) in at least one second direction (Z), wherein the first direction (X) and the second direction (Z) extend perpendicular to one another,
**characterized in that** the first positioning device and/or the second positioning device (16) have/has at least one eccentric (68), and at least one carriage (38) on which the at least one support element (18) is situated, wherein the at least one carriage (38) is displaceable in the first direction (X) or second direction (Z) by means of the at least one eccentric (68), wherein the lift of the carriage (38) is adjustable in the first direction (X) or the second direction (Z) via a stop assembly (50).

2. The device (10) according to Claim 1,
wherein the second positioning device (16) is mounted on the first positioning device (14) and is displaceable in the first direction (X) via the first positioning device (14).

3. The device (10) according to Claim 1 or 2,
wherein the eccentric (68) is drivable via at least one motor (40), wherein the eccentric (68) is coupled to the at least one motor (40) via at least one drive shaft (76) and at least one belt drive (90),
wherein in particular the at least one motor (40) drives the at least one belt drive (90), which drives the at least one eccentric (68) via the at least one drive shaft (76), wherein the at least one drive shaft (76) preferably extends, at least in sections, through the first positioning device (14).

4. The device (10) according to one of Claims 1 to 3,
wherein the first positioning device (14) and/or the second positioning device (16) have/has at least one guide device (44, 46) that guides the lifting movement of the carriage (38).

5. The device (10) according to one of Claims 1 to 4,
wherein the at least one stop assembly (50) has at least one wedge assembly (KS) that adjusts the lift of the at least one carriage (38),
wherein in particular the at least one wedge assembly (KS) has at least one first wedge (64) and at least one second wedge (66), wherein the first wedge (64) and the second wedge (66) are displaceable relative to one another in the second direction (Z),
wherein at least the first wedge (64) is preferably not displaceable on the first positioning device (14) in the second direction.

6. The device (10) according to Claim 5,
wherein the second wedge (66) is situated on the at least one carriage (38) of the second positioning device (16), and together with the carriage (38) is displaceable via the eccentric (68), and/or
wherein for limiting the lift of the carriage (38), the first wedge (64) and the second wedge (66) may be brought into contact with one another with their wedge faces (86, 88).

7. The device (10) according to one of Claims 5 or 6,
wherein the first wedge (64) or the second wedge (66) is displaceable transversely with respect to the second direction (Z) in order to adjust the lift of the carriage (38).

8. The device (10) according to one of Claims 5 to 7,
wherein the at least one stop assembly (50) has at least one locking device (VE) that is used to lock the at least one wedge assembly (KS) in a predetermined position, wherein in particular the at least one locking device (VE) has at least one displaceable element (58) that is movable between a release position in which the first wedge (64) is displaceable, and a locking position in which the first wedge (64) is fixed in a predetermined position.

9. The device (10) according to Claim 8,
wherein the wedge assembly (KS) has at least one stop element (60) on which the first wedge (64) is situated, wherein the at least one stop element (60) in the locking position is clamped between the at least one displaceable element (58) and a housing (52) of the stop assembly (50).

10. The device (10) according to one of Claims 5 to 9,
wherein the first wedge (64) is displaceable in the second direction (X) via at least one spindle (58).

11. The device (10) according to one of Claims 1 to 10,
wherein the eccentric (68) has at least one rotatably supported track roller (80).

12. The device (10) according to one of Claims 1 to 11,
wherein the carriage (38) has at least one recess (82) in which the eccentric (68) is accommodated at least in sections, wherein the wall of the recess (82) cooperates with the eccentric (68) for displacement of the carriage (38),
wherein the at least one track roller (80) of the at least one eccentric (68) with its outer circumferential surface is preferably in contact, at least in sections, with the wall of the at least one recess (82) of the carriage (38),
wherein furthermore the recess (82) is preferably designed with a contour (84) such that, based on the movement of the eccentric (68) with the track roller (80) situated thereon in interaction with the contour (84) of the recess (82), the resultant force for actuating the carriage (38), in particular the vertically upwardly acting resultant force, remains essentially constant.

13. The device (10) according to one of Claims 1 to 12,
wherein the device has a support device (20) for the workpiece (12) to be supported, the support device being displaceable relative to the first and/or the second positioning device (14, 16).

14. The device (10) according to one of Claims 1 to 13,
wherein the first positioning unit (14) or the second positioning device (16) is designed in such a way that the position of the at least one support element (18) is adjustable in the first direction (X) or in the second direction (Z) by elastic deformation of at least one elastically deformable section (32),
wherein in particular at least the at least one first positioning unit (16) is coupleable to a machine tool (100).

15. A machine tool (100) having a device (10) according to one of Claims 1 to 14.

## Revendications

1. Dispositif (10) pour soutenir une pièce (12) à usiner par une machine-outil (100), comportant
- au moins un élément de soutien (18) qui peut être mis en contact avec la pièce (12) à soutenir,
- au moins un premier moyen de positionnement (14) pour positionner ledit au moins un élément de soutien (18) dans au moins une première direction (X),
- au moins un deuxième moyen de positionnement (16) pour positionner ledit au moins un élément de soutien (18) dans au moins une deuxième direction (Z), la première direction (X) et la deuxième direction (Z) étant perpendiculaires entre elles,
**caractérisé en ce que** le premier moyen de positionnement et/ou le deuxième moyen de positionnement (16) comprennent au moins un excentrique (68) et au moins un chariot (38) sur lequel est disposé ledit au moins un élément de soutien (18), ledit au moins un chariot (38) pouvant être déplacé dans la première direction (X) ou la deuxième direction (Z) au moyen dudit au moins un excentrique (68), la course du chariot (38) dans la première direction (X) ou la deuxième direction (Z) étant réglable par un agencement de butée (50).

2. Dispositif (10) selon la revendication 1,
dans lequel le deuxième moyen de positionnement (16) est monté sur le premier moyen de positionnement (14) et peut être déplacé dans la première direction (X) par le premier moyen de positionnement (14).

3. Dispositif (10) selon l'une des revendications 1 ou 2,
dans lequel l'excentrique (68) peut être entraîné par au moins un moteur (40), l'excentrique (68) étant couplé audit au moins un moteur (40) par au moins un arbre d'entraînement (76) et au moins une transmission par courroie (90),
dans lequel notamment ledit au moins un moteur (40) entraîne ladite au moins une transmission par courroie (90) qui entraîne ledit au moins un excentrique (68) par l'intermédiaire dudit au moins un arbre d'entraînement (76),
dans lequel, de préférence, ledit au moins un arbre d'entraînement (76) s'étend au moins sur certaines parties à travers le premier moyen de positionnement (14).

4. Dispositif (10) selon l'une des revendications 1 à 3,
dans lequel le premier moyen de positionnement (14) et/ou le deuxième moyen de positionnement (16) comprennent au moins un moyen de guidage (44, 46) qui guide le mouvement de course du chariot (38).

5. Dispositif (10) selon l'une des revendications 1 à 4,
dans lequel ledit au moins un agencement de butée (50) comprend au moins un agencement de cales (KS) qui règle la course dudit au moins un chariot (38),
dans lequel notamment ledit au moins un agencement de cales (KS) comprend au moins une première cale (64) et au moins une deuxième cale (66), la première cale (64) et la deuxième cale (66) étant déplaçables l'une par rapport à l'autre dans la deuxième direction (Z),
dans lequel, de préférence, au moins la première cale (64) est disposée de manière non déplaçable dans la deuxième direction sur le premier moyen de positionnement (14).

6. Dispositif (10) selon la revendication 5,
dans lequel la deuxième cale (66) est disposée sur ledit au moins un chariot (38) du deuxième moyen de positionnement (16) et peut être déplacée avec le chariot (38) par l'excentrique (68) et/ou
dans lequel, pour limiter la course du chariot (38), la première cale (64) et la deuxième cale (66) peuvent être mises en butée l'une contre l'autre par leurs surfaces de cale (86, 88).

7. Dispositif (10) selon l'une des revendications 5 ou 6,
dans lequel la première cale (64) ou la deuxième cale (66) est déplaçable transversalement à la deuxième direction (Z) pour régler la course du chariot (38).

8. Dispositif (10) selon l'une des revendications 5 à 7,
dans lequel ledit au moins un agencement de butée (50) comprend au moins un moyen de verrouillage (VE) destiné à verrouiller ledit au moins un agencement de cales (KS) dans une position prédéterminée,
dans lequel notamment ledit au moins un moyen de verrouillage (VE) comprend au moins un élément déplaçable (58) qui peut être déplacé entre une position de libération, dans laquelle la première cale (64) est déplaçable, et une position de verrouillage, dans laquelle la première cale (64) est fixée dans une position prédéterminée.

9. Dispositif (10) selon la revendication 8,
dans lequel l'agencement de cales (KS) comprend au moins un élément de butée (60) sur lequel la première cale (64) est disposée, ledit au moins un élément de butée (60) étant serré entre ledit au moins un élément déplaçable (58) et un boîtier (52) de l'agencement de butée (50) dans la position de verrouillage.

10. Dispositif (10) selon l'une des revendications 5 à 9,
dans lequel la première cale (64) est déplaçable dans la deuxième direction (X) par au moins une broche (58).

11. Dispositif (10) selon l'une des revendications 1 à 10,
dans lequel l'excentrique (68) comprend au moins un galet (80) monté rotatif.

12. Dispositif (10) selon l'une des revendications 1 à 11,
dans lequel le chariot (38) comprend au moins un évidement (82) dans lequel l'excentrique (68) est reçu au moins sur certaines parties, la paroi de l'évidement (82) coopérant avec l'excentrique (68) pour déplacer le chariot (38),
dans lequel, de préférence, ledit au moins un galet (80) dudit au moins un excentrique (68) est en contact, par sa surface périphérique extérieure, au moins sur certaines parties, avec la paroi dudit au moins un évidement (82) du chariot (38),
dans lequel, plus préférentiellement, l'évidement (82) est conçu de préférence avec un contour (84) tel que, par le mouvement de l'excentrique (68) avec le galet (80) disposé sur celui-ci en interaction avec le contour (84) de l'évidement (82), la force résultante pour actionner le chariot (38), notamment la force résultante agissant verticalement vers le haut, reste sensiblement constante.

13. Dispositif (10) selon l'une des revendications 1 à 12,
dans lequel le dispositif comprend un dispositif de soutien (20) pour la pièce (12) à soutenir, lequel est déplaçable par rapport au premier et/ou deuxième moyen de positionnement (14, 16).

14. Dispositif (10) selon l'une des revendications 1 à 13,
dans lequel la première unité de positionnement (14) ou le deuxième moyen de positionnement (16) est conçu(e) de telle sorte que la position dudit au moins un élément de soutien (18) peut être réglée dans la première direction (X) ou dans la deuxième direction (Z) par une déformation élastique d'au moins une partie élastiquement déformable (32),
dans lequel notamment ladite au moins une première unité de positionnement (16) peut être couplée à une machine-outil (100).

15. Machine-outil (100) dotée d'un dispositif (10) selon l'une des revendications 1 à 14.
